# EUROPEAN PATENT APPLICATION

(11) **EP 4 832 271 A1**
(43) Date of publication of application: **28.10.2026**
(21) Application number: 24925672.8
(22) Date of filing: 31.12.2024
(51) Int. Cl.: H02B 1/24, H01M 50/244, H02J 7/00

(54) **POWER DISTRIBUTION APPARATUS, BATTERY APPARATUS AND ELECTRICAL APPARATUS**

(30) Priority: 21.02.2024 CN 202420321953 U; 11.09.2024 CN 202422219120 U; 13.11.2024 WO PCT/CN2024/131851
(71) Applicant: Contemporary Amperex Technology Co., Limited, Ningde, Fujian 352100 (CN)
(72) Inventor: QIU, Guanda, Ningde, Fujian 352100 (CN); LI, Yuanxin, Ningde, Fujian 352100 (CN); WANG, Chong, Ningde, Fujian 352100 (CN)
(74) Representative: Kraus & Lederer PartGmbB
(86) International application number: PCT/CN2024/144577
(87) International publication number: WO 2025/175936

(57) **Abstract**

Provided in the present application are a power distribution apparatus (400), a battery apparatus (100) and an electrical apparatus. In a first direction (H), a first housing (410), a second housing (420) and a third housing (430) of the power distribution apparatus (400) are sequentially stacked; a first connection portion (451) of an electrical connector (450) is connected to a first end (421) of the second housing (420) and is at least partially exposed through a first opening portion (411), and a second connection portion (452) of the electrical connector (450) is connected to a second end (422) of the second housing (420) and is at least partially exposed through a third opening portion (431). The power distribution apparatus (400) of the embodiments of the present application uses the first housing (410) and the third housing (430) to cover and protect an electrical device (440) and the electrical connector (450), so as to improve the reliability of the power distribution apparatus (400).

## Description

This application refers to International Patent Application No. PCT/CN2024/131851 filed on November 13, 2024 and entitled "ELECTRIC CONTROL APPARATUS, BATTERY APPARATUS, AND ELECTRIC APPARATUS", Chinese Patent Application No. 202420321953.7 filed on February 21, 2024 and entitled "HIGH-VOLTAGE CONTROL BOX AND ELECTRIC APPARATUS", and Chinese Patent Application No. 202422219120.2 filed on September 11, 2024 entitled "BATTERY APPARATUS, ELECTRIC CONTROL BOX, AND ELECTRIC APPARATUS", the entire contents of which are incorporated herein by reference.

### TECHNICAL FIELD

This application relates to the field of battery technology and particularly provides a power distribution apparatus, a battery apparatus, and an electric apparatus.

### BACKGROUND

The current global automotive industry faces enormous challenges from energy and environmental issues, and battery electric vehicles with high energy utilization and no environmental pollution are increasingly becoming the direction of future automotive industry development. As a core component of electric vehicles, the safety of traction batteries directly affects the overall performance and driving safety of electric vehicles.

A battery apparatus includes a box and modules such as a battery cell assembly and a power distribution apparatus accommodated in the box, where the power distribution apparatus can be configured to manage the charging and discharging of the battery cell assembly. Therefore, how to improve the reliability of the power distribution apparatus is a research direction in battery technology.

### SUMMARY

Embodiments of this application are intended to provide a power distribution apparatus, a battery apparatus, and an electric apparatus, aiming to improve the reliability of the power distribution apparatus.

To achieve the above objective, the technical solutions adopted by the embodiments of this application are described below.

According to a first aspect, this application provides a power distribution apparatus including a first housing, a second housing, a third housing, an electric component, and an electrical connector, where in a first direction, the first housing, the second housing, and the third housing are sequentially stacked; the electric component is disposed on the second housing; the electrical connector is electrically connected to the electric component; the electrical connector includes a first connection portion and a second connection portion; the second housing has a first end facing the first housing and a second end facing the third housing; the first connection portion is connected to the first end; the second connection portion is connected to the second end; a first opening portion is provided on the first housing; the first housing covers the first end; the first connection portion is at least partially exposed at the first opening portion; a third opening portion is provided on the third housing; the third housing covers the second end; and the second connection portion is at least partially exposed at the third opening portion.

The beneficial effects of the embodiments of this application are as follows: in the power distribution apparatus provided in the embodiments of this application, the second housing is configured to dispose the electric component and the electrical connector, and the first housing and the third housing are configured to protect the second housing in the first direction respectively, providing covering and protection for the electric component and the electrical connector, thereby improving the protection effect on the electric component and the electrical connector, and further improving the reliability of the power distribution apparatus. In addition, the first connection portion of the electrical connector is at least partially exposed at the first opening portion of the first housing to achieve an electrical connection, and the second connection portion is at least partially exposed at the third opening portion of the third housing to achieve heat dissipation, thereby meeting the electrical connection needs and heat dissipation needs of the power distribution apparatus, and further improving the reliability of the power distribution apparatus.

In some embodiments, a protection member is disposed on the first housing, where the protection member covers the first opening portion, and the protection member is configured to be able to open the first opening portion.

With the above technical solution adopted, the protection member can cover the first opening portion, so that the protection member can cover and protect the first connection portion exposed at the first opening portion, thereby further improving the protection performance for the first connection portion. In addition, the protection member can also open the first opening portion, thereby reducing the impact on the connection operation of the first connection portion.

In some embodiments, the first connection portion includes a first connection end and a second connection end, where the first connection end is configured to be connected to a battery cell assembly, and the second connection end is configured to be connected to an electric apparatus or a charging apparatus.

With the above technical solution adopted, the first connection end is configured to be connected to the battery cell assembly, and the second connection end is configured to be connected to the electric apparatus or the charging apparatus, thereby achieving charging and discharging management of the battery cell assembly by the power distribution apparatus.

In some embodiments, the power distribution apparatus further includes a heat conduction member, where in the first direction, the heat conduction member is disposed on a side of the third housing facing away from the second housing, and a portion of the second connection portion exposed at the third opening portion is in contact with the heat conduction member.

With the above technical solution adopted, the heat conduction member is in contact with the second connection portion exposed at the third opening portion, and the heat conduction member is configured to improve the heat dissipation efficiency of the second connection portion, thereby reducing the temperature rise inside the power distribution apparatus.

In some embodiments, a mounting groove is provided on a side surface of the third housing facing away from the second housing, where the heat conduction member is accommodated in the mounting groove, and the third opening portion is provided on an inner bottom wall of the mounting groove.

With the above technical solution adopted, the heat conduction member is accommodated in the mounting groove, so that a dimension by which the heat conduction member protrudes from an outer surface of the third housing is reduced, thereby reducing the overall size of the power distribution apparatus.

In some embodiments, the electric component includes a main relay, where the main relay includes a relay body and a high-voltage contact, the relay body is disposed on the second housing, the high-voltage contact is disposed along a second direction and faces the exterior of the second housing, and the second direction is perpendicular to the first direction; and the electrical connector further includes a third connection portion, and in the second direction, the third connection portion is located on a side of the second housing close to the high-voltage contact and connected to the high-voltage contact.

With the above technical solution adopted, the high-voltage contact of the main relay is disposed along the second direction and faces the exterior of the second housing, and the third connection portion is configured to be connected to the high-voltage contact on a side of the second housing along the second direction, thereby achieving the connection between the electrical connector and the main relay.

In some embodiments, a covering portion is provided on the third housing, where in the second direction, the covering portion is located on a side of the second housing close to the third connection portion, and the covering portion covers the third connection portion.

With the above technical solution adopted, the covering portion is configured to cover and protect the third connection portion in the second direction, improving the protection effect on the third connection portion, thereby further improving the reliability of the power distribution apparatus.

In some embodiments, the electric component includes a main relay, where the main relay includes a relay body and a high-voltage contact, the relay body is disposed on the second housing, the high-voltage contact is disposed along the first direction and faces the third housing, and the high-voltage contact is connected to the second connection portion.

With the above technical solution adopted, the high-voltage contact of the main relay is disposed along the first direction and faces the third housing, so that the second connection portion is configured to form a connection with the high-voltage contact, thereby achieving the connection between the electrical connector and the main relay.

In some embodiments, the third housing includes a bottom housing portion and a first flange portion disposed at an outer edge of the bottom housing portion, where the bottom housing portion and the first flange portion jointly cover the second end along the first direction; the bottom housing portion is connected to the second housing, and/or the first flange portion is connected to the second housing; and the bottom housing portion is provided with the third opening portion.

With the above technical solution adopted, when the third housing is stacked on the second end of the second housing along the first direction, the bottom housing portion and the first flange portion can jointly cover the second end and are connected to the second housing, thereby effectively improving the covering and protection effect on the second end of the second housing.

In some embodiments, a plurality of third opening portions are provided, where in the first direction, a separation portion is disposed on a side wall surface of the third housing facing away from the second housing, and the separation portion is disposed between two adjacent third opening portions and configured to separate the two adjacent third opening portions.

With the above technical solution adopted, the separation portion can increase electrical clearance and creepage distance between adjacent second connection portions, thereby reducing the probability of short-circuit arcing.

In some embodiments, the first housing includes a top cover portion and a second flange portion disposed at an outer edge of the top cover portion, where the top cover portion and the second flange portion jointly cover the first end along the first direction; the top cover portion is connected to the second housing, and/or the second flange portion is connected to the second housing; and the top cover portion is provided with the first opening portion.

With the above technical solution adopted, when the first housing is stacked on the first end of the second housing along the first direction, the top cover portion and the second flange portion can jointly cover the first end, thereby effectively improving the covering and protection effect on the first end of the second housing.

In some embodiments, a plurality of first conductor members spaced apart are embedded inside the first housing, where a first extension portion is formed between adjacent first conductor members; a first through hole is further provided on the first housing; and the first through hole is located between two opposite first extension portions of two adjacent first conductor members.

With the above technical solution adopted, the first through hole is provided on the first housing, so that the plurality of first conductor members can all be exposed at the first through hole, facilitating the processing of the first conductor members.

In some embodiments, a plurality of second conductor members spaced apart are embedded inside the first housing, where a second extension portion is formed between adjacent second conductor members; a second through hole is further provided on the first housing portion, and the second through hole is located between two opposite second extension portions of two adjacent second conductor members; and the power distribution apparatus further includes a partition portion, and the partition portion is inserted into the first through hole and separates the two second extension portions.

With the above technical solution adopted, the second through hole is provided on the second housing, and the partition portion is inserted into the first through hole to separate the two opposite second extension portions of two adjacent second conductor members, so that electrical clearance and creepage distance between the two second extension portions of the two adjacent second conductor members can be effectively ensured, thereby reducing the probability of short circuit between the two second extension portions.

In some embodiments, at least one accommodating cavity is formed on the second housing, and the electric component is accommodated in the accommodating cavity.

With the above technical solution adopted, the accommodating cavity is configured to accommodate the electric component for assembly, thereby achieving stable assembly of the electric component.

According to a second aspect, an embodiment of this application further provides a battery apparatus including a box, a battery cell assembly, and the foregoing power distribution apparatus, where the battery cell assembly and the power distribution apparatus are accommodated in the box, and the power distribution apparatus is electrically connected to the battery cell assembly.

The beneficial effects of this embodiment of this application are as follows: the battery apparatus provided in this embodiment of this application includes the foregoing power distribution apparatus, and on the basis that the above power distribution apparatus has higher reliability, the reliability of the battery apparatus is also higher.

In some embodiments, the battery apparatus further includes a heat exchange plate, where the heat exchange plate is attached to the battery cell assembly; and the power distribution apparatus includes a heat conduction member, and the heat conduction member is attached to the heat exchange plate.

With the above technical solution adopted, the power distribution apparatus can share the heat exchange plate through the heat conduction member, thereby improving the heat dissipation effect on the power distribution apparatus.

According to a third aspect, an embodiment of this application further provides an electric apparatus including the foregoing battery apparatus, and the battery apparatus is configured to supply electrical energy.

The beneficial effects of this embodiment of this application are as follows: the electric apparatus provided in this embodiment of this application includes the foregoing battery apparatus, so that the reliability of the electric apparatus is also higher.

### BRIEF DESCRIPTION OF DRAWINGS

To describe the technical solutions of the embodiments of this application more clearly, the following briefly describes the accompanying drawings required for describing the embodiments or the prior art. Apparently, the accompanying drawings in the following descriptions show merely some embodiments of this application, and those of ordinary skill in the art may still derive other drawings from the accompanying drawings without creative efforts.
FIG. 1 is a schematic structural diagram of a vehicle according to an embodiment of this application;
FIG. 2 is an exploded view of a battery apparatus according to an embodiment of this application;
FIG. 3 is a schematic structural exploded view of a battery cell according to an embodiment of this application;
FIG. 4 is a schematic diagram of an overall structure of a power distribution apparatus according to an embodiment of this application;
FIG. 5 is a structural schematic diagram of a power distribution apparatus covered with no protection member according to an embodiment of this application;
FIG. 6 is a partially enlarged schematic diagram of part A in FIG. 5;
FIG. 7 is a structural schematic diagram of a power distribution apparatus according to an embodiment of this application from another perspective;
FIG. 8 is an exploded view of a power distribution apparatus according to an embodiment of this application;
FIG. 9 is an exploded view of a third housing according to an embodiment of this application;
FIG. 10 is an exploded view of a first housing according to an embodiment of this application;
FIG. 11 is a partially enlarged schematic diagram of part B in FIG. 10;
FIG. 12 is a schematic structural exploded view of a second housing, an electric component, and an electrical connector when a high-voltage terminal of a main relay is disposed facing a first direction; and
FIG. 13 is a schematic structural exploded view of a power distribution apparatus when a high-voltage terminal of a main relay is disposed facing a first direction.

The reference signs in the drawings are as follows:
1000. vehicle;
100. battery apparatus; 110. battery cell assembly; 200. controller; 300. motor;
10. box; 30. heat exchange plate;
20. battery cell; 21. end cover; 21a. electrode terminal; 22. housing; 23. electrode assembly; 23a. tab;
400. power distribution apparatus;
410. first housing; 4101. top cover portion; 4102. second flange portion; 410a. first through hole; 410b. second through hole; 411. first opening portion; 412. protection member; 413. first conductor member; 4131. first extension portion; 414. second conductor member; 4141. second extension portion; 415. partition portion;
420. second housing; 4201. accommodating cavity; 421. first end; 422. second end;
430. third housing; 4301. bottom housing portion; 4301a. separation portion; 4302. first flange portion; 4302a. covering portion; 431. third opening portion; 432. heat conduction member; 433. mounting groove; 434. sealing member;
440. electric component; 441. main relay; 441a. first main relay; 441b. second main relay; 4411. relay body; 4412. high-voltage contact; 442. fuse; 443. current sensor; 443a. first current sensor; 443b. second current sensor; 444. pre-charge resistor; 445. pre-charge relay;
450. electrical connector; 4501. first conductive sheet; 4502. second conductive sheet; 4503. third conductive sheet; 4504. fourth conductive sheet; 4505. fifth conductive sheet; 4506. sixth conductive sheet; 4507. seventh conductive sheet; 4508. eighth conductive sheet; 4509. ninth conductive sheet; 451. first connection portion; 451a. first connection end; 451b. second connection end; 452. second connection portion; 453. third connection portion;
H. first direction; and D. second direction.

### DESCRIPTION OF EMBODIMENTS

The embodiments of this application are described in detail below. Examples of the embodiments are shown in the accompanying drawings, and reference signs that are the same or similar always indicate the same or similar components or components with the same or similar functions. The embodiments described below with reference to the accompanying drawings are illustrative, are intended to explain this disclosure, and should not be construed as limitations on this disclosure.

In the description of this application, it should be understood that the terms "length", "width", "upper", "lower", "front", "rear", "left", "right", "vertical", "horizontal", "top", "bottom", "inner", "outer" and the like indicate orientations or positional relationships based on the orientations or positional relationships shown in the drawings, and are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application.

In addition, the terms "first" and "second" are used for descriptive purposes only and should not be construed as indicating or implying relative importance or implicitly indicating the number of technical features indicated. Thus, a feature defined as "first" or "second" may explicitly or implicitly include one or more such features. In the description of this application, "a plurality of" means at least two, unless otherwise specifically defined.

In this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Those of ordinary skill in the art can understand specific meanings of these terms in the embodiments of this application as suitable to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing. A battery apparatus includes a box and modules such as a battery cell assembly and a power distribution apparatus accommodated in the box, where the power distribution apparatus can be configured to manage the charging and discharging of the battery cell assembly. Therefore, how to improve the reliability of the power distribution apparatus is a research direction in battery technology.

Based on the above considerations, to improve the reliability of the power distribution apparatus, a power distribution apparatus is designed, where an electric component and an electrical connector are disposed on a second housing. A first housing, a second housing, and a third housing are sequentially stacked along a first direction. The first housing and the third housing are configured to cover and protect the two opposite ends of the second housing along the first direction, which can effectively improve the protection effect on the electric component and the electrical connector disposed on the second housing, thereby effectively improving the reliability of the power distribution apparatus. In addition, a first connection portion of the electrical connector is at least partially exposed at a first opening portion to achieve an electrical connection between the first connection portion and an external structure. A second connection portion of the electrical connector is at least partially exposed at a third opening portion to achieve heat dissipation of the second connection portion at the third opening portion.

The power distribution apparatus disclosed in the embodiments of this application can be applied to electric apparatuses using battery apparatuses as power sources or various energy storage systems using battery apparatuses as energy storage elements. The electric apparatuses may be but are not limited to mobile phones, tablets, notebook computers, electric toys, electric tools, electric bicycles, electric cars, ships, spacecraft, and the like. The electric toys may include fixed or mobile electric toys, such as game consoles, electric toy cars, electric toy ships, and electric toy aircraft. The spacecraft may include airplanes, rockets, space shuttles, spaceships, and the like.

The electric apparatus may refer to an apparatus using a traction battery as a power source. The power source supplies electrical energy to the electric apparatus to drive the electric apparatus to operate. The electric apparatus is typically provided with a power distribution apparatus, and the power distribution apparatus is configured to control the operation of a high-voltage circuit in the electric apparatus, where the "voltage" in the high-voltage circuit refers to a voltage, and the high-voltage circuit refers to a circuit with a voltage exceeding 60 V. Exemplarily, the power distribution apparatus may be a high-voltage power distribution box. The high-voltage power distribution box may refer to a component configured to implement power distribution and management of the high-voltage circuit in the electric apparatus, for example, a PDU (Power Distribution Unit, high-voltage power distribution unit) used in new energy vehicles, where the function of the PDU is to be responsible for power distribution and management in the high-voltage circuit of new energy vehicles, providing charging and discharging control, high-voltage component power-on control, circuit overload short-circuit protection, high-voltage sampling, low-voltage control, and other functions for the whole vehicle, thereby protecting and monitoring the operation of the high-voltage circuit. The high-voltage power distribution box may also refer to a component applied in batteries and configured to control the charging and discharging of the battery, for example, a BDU (Battery Disconnect Unit, battery disconnect unit), where the BDU is a high-voltage power distribution box specially designed for batteries to control battery charging and discharging.

For ease of description, an electric apparatus according to an embodiment of this application being a vehicle 1000 is used as an example for description of the following embodiments.

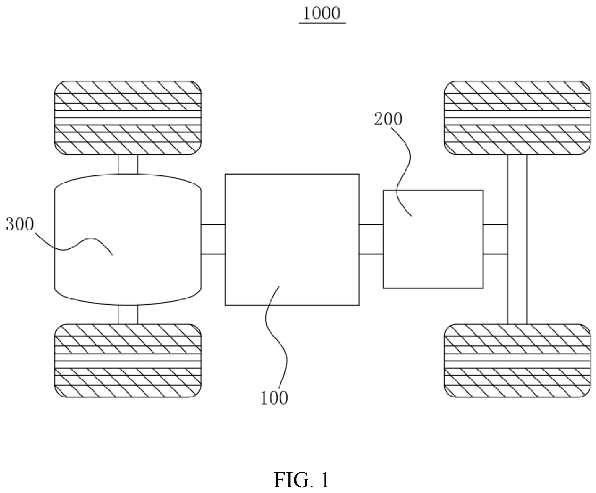

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, an extended range electric vehicle, or the like. A battery apparatus 100 is provided inside the vehicle 1000. The battery apparatus 100 may be disposed at the bottom, front, or rear of the vehicle 1000. The battery apparatus 100 may be configured to supply power to the vehicle 1000. For example, the battery apparatus 100 can serve as an operational power source of the vehicle 1000. The vehicle 1000 may also include a controller 200 and a motor 300. The controller 200 is configured to control the battery apparatus 100 to supply power to the motor 300, for example, to satisfy power needs of start, navigation, and driving of the vehicle 1000.

In some embodiments of this application, the battery apparatus 100 can be used as not only the operational power source for the vehicle 1000 but also a driving power source for the vehicle 1000, replacing or partially replacing fossil fuel or natural gas to provide driving traction for the vehicle 1000.

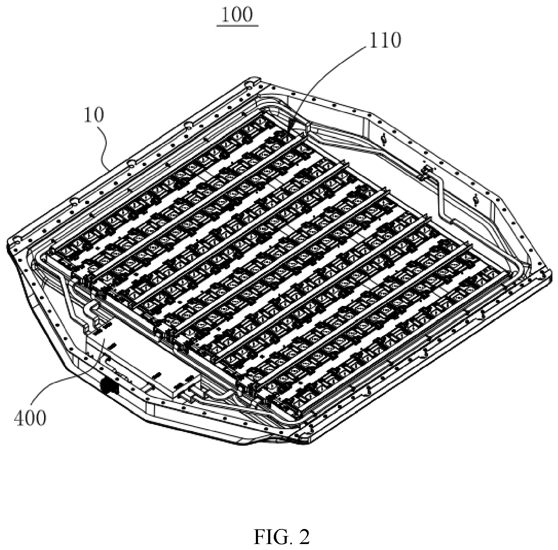

Referring to FIG. 2, FIG. 2 is an exploded view of a battery apparatus 100 according to some embodiments of this application. The battery apparatus 100 according to the embodiments of this application may include one or more battery cell assemblies 110 for providing voltage and capacity. The battery cell assembly 110 may include a plurality of battery cells 20. The plurality of battery cells 20 are connected in series, parallel, or series-parallel through a busbar component.

In some embodiments, the battery cell assembly 110 is typically formed by arranging a plurality of battery cells 20.

As an example, the battery cell assembly 110 may be a battery module. The battery module is formed by arranging and fastening a plurality of battery cells 20 into an independent module. As an example, the battery module can be formed by bundling a plurality of battery cells 20 with ties.

In some embodiments, the battery apparatus may be a battery pack. The battery pack includes a box 10 and one or more battery cell assemblies 110. The battery cell assembly 110 is accommodated in the box 10.

As an example, the battery cell assembly 110 may be a battery module. The battery cell assembly 110 may be accommodated in the box 10 by fastening the battery module in the box 10.

As an example, the battery cell assembly 110 may alternatively be accommodated in the box 10 by directly fastening a plurality of battery cells 20 to the box 10.

As an example, the box 10 may include a first box body and a second box body. The first box body and the second box body fit each other, so that a sealed space is formed inside the box 10 to accommodate the battery cell assembly 110, where "sealed" here refers to being covered or closed, which may refer to being sealed or non-sealed. The first box body may be a top cover or a bottom plate.

As an example, the box 10 may include a top cover, a frame, and a bottom plate. The top cover and the bottom plate are respectively connected to the frame, so that a sealed space is formed inside the box 10 to accommodate the battery cell assembly 110.

In some embodiments, the box 10 may be used as a part of a chassis structure of the vehicle 1000. For example, a part of the box 10 may become at least a part of the floor of the vehicle 1000, or a part of the box 10 may become at least a part of a cross beam and longitudinal beam of the vehicle 1000.

The technical solutions described in the embodiments of this application are all applicable to various electric apparatuses using battery cells 20, such as mobile phones, portable devices, notebook computers, electric bicycles, electric toys, electric tools, vehicles, ships, and spacecraft. For example, the spacecraft include airplanes, rockets, space shuttles, spaceships, and the like.

In the embodiments of this application, the battery cell 20 may be a secondary battery. The secondary battery refers to a battery cell 20 that can continue to be used by activating an active material through charging after the battery cell is discharged.

The battery cell 20 may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, which is not limited in the embodiments of this application.

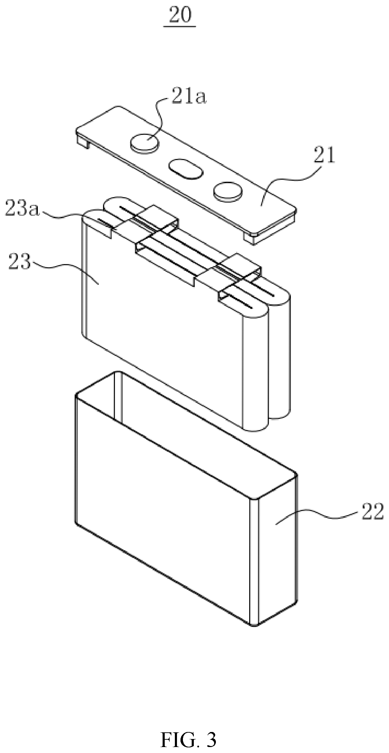

Referring to FIG. 3, FIG. 3 is a schematic structural exploded view of a battery cell 20 according to some embodiments of this application. The battery cell 20 refers to the smallest unit constituting the battery apparatus 100. As shown in FIG. 3, the battery cell 20 includes an end cover 21, a housing 22, an electrode assembly 23, and other functional components.

The end cover 21 refers to a component that covers an opening of the housing 22 to isolate the internal environment of the battery cell 20 from the external environment. Without limitation, the shape of the end cover 21 can be adapted to the shape of the housing 22 to cooperate with the housing 22. Optionally, the end cover 21 may be made of a material with a certain hardness and strength (such as aluminum alloy), so that the end cover 21 is not easily deformed when extruded or collided, allowing the battery cell 20 to have higher structural strength and improved reliability. Functional components such as an electrode terminal 21a may be provided on the end cover 21. The electrode terminal 21a can be configured to be electrically connected to the electrode assembly 23 for outputting or inputting electrical energy of the battery cell 20. In some embodiments, the end cover 21 may be further provided with a pressure relief mechanism for releasing internal pressure when the internal pressure or temperature of the battery cell 20 reaches a threshold. The end cover 21 may also be made of various materials. For example, the material of the end cover 21 may be but is not limited to copper, iron, aluminum, stainless steel, aluminum alloy, and plastic. In some embodiments, an insulating member may also be provided on an inner side of the end cover 21, and the insulating member can be configured to isolate an electrical connection component in the housing 22 from the end cover 21 to reduce the risk of short circuit. Exemplarily, the insulating member may be made of plastic, rubber, or the like.

The housing 22 is a component configured to cooperate with the end cover 21 to form the internal environment of the battery cell 20, where the formed internal environment can be used to accommodate the electrode assembly 23, an electrolyte, and other components. The housing 22 and the end cover 21 may be independent components. An opening may be provided on the housing 22. The end cover 21 covers the opening to form the internal environment of the battery cell 20. Without limitation, the end cover 21 and the housing 22 may alternatively be integrated. Specifically, the end cover 21 and the housing 22 can first form a common connection surface before other components enter the housing, and when the interior of the housing 22 needs to be sealed, the end cover 21 covers the housing 22. The housing 22 may have various shapes and sizes, such as a rectangular shape, a cylindrical shape, and a hexagonal prism shape. Specifically, the shape of the housing 22 can be determined according to the specific shape and size of the electrode assembly 23. The housing 22 may also be made of various materials. For example, the material of the housing 22 may be but is not limited to copper, iron, aluminum, stainless steel, aluminum alloy, and plastic.

The electrode assembly 23 is a component in the battery cell 20 where electrochemical reactions occur. One or more electrode assemblies 23 may be provided in the housing 22. The electrode assembly 23 is mainly formed by winding or stacking a positive electrode plate and a negative electrode plate, and a separator is typically provided between the positive electrode plate and the negative electrode plate. Portions of the positive electrode plate and the negative electrode plate having active materials constitute a body portion of the electrode assembly 23, and portions of the positive electrode plate and the negative electrode plate without active materials each constitute a tab 23a. A positive electrode tab and a negative electrode tab can be jointly located at one end of the body portion or respectively located at two ends of the body portion. During the charging and discharging of the battery, a positive electrode active material and a negative electrode active material react with the electrolyte, and the tab 23a is connected to the electrode terminal 21a to form a current loop.

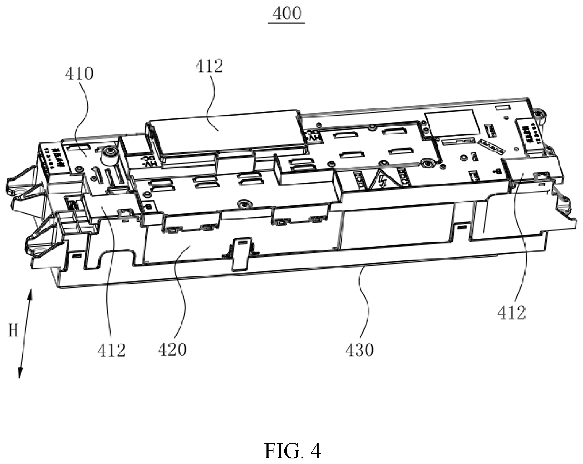

According to some embodiments of this application, referring to FIG. 4, FIG. 5, FIG. 7, and FIG. 8, an embodiment of this application provides a power distribution apparatus 400 including a first housing 410, a second housing 420, a third housing 430, an electric component 440, and an electrical connector 450. In a first direction H, the first housing 410, the second housing 420, and the third housing 430 are sequentially stacked. The electrical connector 450 is disposed on the second housing 420, the electrical connector 450 is electrically connected to the electric component 440, and the electrical connector 450 includes a first connection portion 451 and a second connection portion 452. The second housing 420 has a first end 421 facing the first housing 410 and a second end 422 facing the third housing 430. The first connection portion 451 is connected to the first end 421. The second connection portion 452 is connected to the second end 422. A first opening portion 411 is provided on the first housing 410. The first housing 410 covers the first end 421. The first connection portion 451 is at least partially exposed at the first opening portion 411. A third opening portion 431 is provided on the third housing 430. The third housing 430 covers the second end 422. The second connection portion 452 is at least partially exposed at the third opening portion 431.

The power distribution apparatus 400 includes the first housing 410, the second housing 420, and the third housing 430, where the second housing 420 is configured for carrying the assembly of the electric component 440. Exemplarily, the electric component 440 may be fixedly assembled on the second housing 420 through manners such as snap-fit connection, plug-in connection, and fastener connection. Alternatively, accommodating structures such as accommodating grooves and mounting holes may be provided on the second housing 420 to accommodate the electric component 440 and form protection and positioning assembly effects on the electric component 440.

In the first direction H, the second housing 420 has the first end 421 and the second end 422. It should be understood that the first end 421 refers to an end portion of one side of the second housing 420 facing the first housing 410 in the first direction H, and the second end 422 refers to an end portion of the other side of the second housing 420 facing the third housing 430 in the first direction H. Thus, when the first housing 410, the second housing 420, and the third housing 430 are sequentially stacked in the first direction H, the first housing 410 can cover and protect the first end 421 of the second housing 420, and the third housing 430 can cover and protect the second end 422 of the second housing 420.

The first housing 410 and the second housing 420 may be connected through manners such as clamping engagement, snap-fit connection, and fastener connection. The second housing 420 and the third housing 430 may be connected through manners such as clamping engagement, snap-fit connection, and fastener connection. Exemplarily, in some embodiments, the first housing 410 and the second housing 420 may be fixedly connected through fasteners, that is, fasteners such as bolts and screws are used to lock and connect the first housing 410 and the second housing 420 along the first direction H. The second housing 420 and the third housing 430 may be fastened through snap-fit connection. A snap-fit protrusion may be provided on an outer peripheral wall surface of the second housing 420 around the first direction H, and a corresponding snap-fit groove is provided on the third housing 430. The third housing 430 is stacked on the second housing 420 along the first direction H, and the snap-fit protrusion is inserted into the snap-fit groove to achieve connection.

The above first direction H may be any direction of the second housing 420, for example, a length direction of the second housing 420, a width direction of the second housing 420, or a height direction of the second housing 420. For ease of description, the first direction H being the height direction of the second housing 420 is taken as an example for description in this application.

The electric component 440 may be but is not limited to components such as relays, fuses, resistors, and current sensors. The electric component 440 is mounted on the second housing 420 and achieves electrical conduction through the electrical connector 450. Exemplarily, in some embodiments, the electric component 440 may include a relay and a fuse 442. The relay and the fuse 442 are connected in series through the electrical connector 450 and electrically connected to the battery cell assembly 110 of the battery apparatus 100 and the electric apparatus. Thus, the relay and the fuse 442 can control the battery cell assembly 110 to supply power to the electric apparatus, and the fuse 442 can protect the circuit.

The electrical connector 450 may refer to a conductive structure used for electrically conducting the electric component 440. Optionally, the electrical connector 450 may be but is not limited to metal conductors such as copper, aluminum, silver, and gold. Exemplarily, in some embodiments, the electrical connector 450 may be a copper bar, a copper sheet, or other structures. One or more electrical connectors 450 may be provided.

The electrical connector 450 is disposed on the second housing 420, for example, fixedly assembled on the second housing 420 through manners such as snap-fit connection, embedding, and fastener connection. Exemplarily, in some embodiments, the electrical connector 450 may be assembled on an outer surface of the second housing 420 and fixedly mounted on the second housing 420 through fasteners such as bolts and screws. Alternatively, one part of the electrical connector 450 may be partially embedded inside the second housing 420, and another part is exposed at the second housing 420. The electrical connector 450 may be fixedly assembled on the second housing 420 through a combination of embedding and fastener fixation.

The electrical connector 450 includes a first connection portion 451 and a second connection portion 452. It should be understood that the first connection portion 451 refers to one part of the electrical connector 450, and the first connection portion 451 may be but is not limited to conductive structures such as conductive bars and conductive sheets. One or more first connection portions 451 may be provided. The first connection portion 451 is connected to the first end 421. Optionally, the first connection portion 451 may be fixed to the first end 421 through fasteners such as bolts and screws. Alternatively, an embedding groove may be provided on the first end 421, and the first connection portion 451 may be fixedly embedded in the embedding groove. The first connection portion 451 may be configured to be electrically connected to an external structure. For example, the first connection portion 451 may be electrically connected to the battery cell assembly 110 of the battery apparatus 100, or electrically connected to an electric apparatus, a charging apparatus, or the like. Alternatively, the first connection portion 451 may also be configured to perform outward heat radiation to achieve heat dissipation.

The above charging apparatus may refer to a device configured to charge the battery cell assembly 110, such as a charging pile and a charger.

Similarly, the second connection portion 452 refers to one part of the electrical connector 450, and the second connection portion 452 may be but is not limited to conductive structures such as conductive bars and conductive sheets. One or more second connection portions 452 may be provided. The second connection portion 452 is connected to the second end 422. Optionally, the second connection portion 452 may be fixed to the second end 422 through fasteners such as bolts and screws. Alternatively, an embedding groove may be provided on the second end 422, and the second connection portion 452 may be fixedly embedded in the embedding groove. The second connection portion 452 may be configured to be electrically connected to an external structure. For example, the second connection portion 452 may be electrically connected to the battery cell assembly 110 of the battery apparatus 100, or electrically connected to an electric apparatus, a charging apparatus, or the like. Alternatively, the second connection portion 452 may also be configured to perform outward heat radiation to achieve heat dissipation.

Exemplarily, in some embodiments, the first connection portion 451 may be configured to be electrically connected to the battery cell assembly 110 of the battery apparatus 100, or electrically connected to an electric apparatus, a charging apparatus, or the like. The second connection portion 452 may be configured to perform outward heat radiation to achieve heat dissipation. Thus, the electric component 440 may be connected in series between the battery cell assembly 110 and the electric apparatus through the first connection portion 451 of the electrical connector 450 to achieve discharge control of the battery apparatus 100. Alternatively, the electric component 440 may be connected in series between the battery cell assembly 110 and the charging apparatus through the first connection portion 451 of the electrical connector 450 to achieve charging control of the battery apparatus 100. The second connection portion 452 performs outward heat radiation to achieve heat dissipation, thereby improving the heat dissipation efficiency of the electrical connector 450 and reducing the temperature rise inside the power distribution apparatus 400.

The first opening portion 411 is provided on the first housing 410. The first opening portion 411 refers to a through structure provided on the first housing 410 along the first direction H. One, two, three, or more first opening portions 411 may be provided. The first opening portion 411 may be provided at any position on the first housing 410. For example, the first opening portion 411 may be provided on a middle portion of the first housing 410 or provided at an outer edge of the first housing 410, or the like. Thus, when the first housing 410 is stacked on the second housing 420 along the first direction H, the first housing 410 can cover and protect the first end 421 of the second housing 420. In addition, the first opening portion 411 provided on the first housing 410 can allow the first connection portion 451 to be at least partially exposed, thereby reducing the impact of the first housing 410 on a wiring operation of the first connection portion 451, or reducing the impact of the first housing 410 on the heat dissipation of the first connection portion 451.

Optionally, the first connection portion 451 may extend into the first opening portion 411, and the first connection portion 451 at least partially extends out of the first housing 410. Alternatively, the first connection portion 451 may extend into the first opening portion 411 but does not extend out of the first housing 410. Alternatively, the first connection portion 451 does not extend into the first opening portion 411, and the first connection portion 451 is located on a side of the first housing 410 facing the second housing 420 along the first direction H.

Exemplarily, in some embodiments, three first opening portions 411 may be provided, where the first connection portions 451 exposed at two first opening portions 411 may be configured to be electrically connected to the positive electrode and the negative electrode of the battery cell assembly 110, and the first connection portion 451 exposed at the third first opening portion 411 may be configured to be electrically connected to the electric apparatus or the charging apparatus so as to achieve charging and discharging control.

The third opening portion 431 is provided on the third housing 430. The third opening portion 431 refers to a through structure provided on the third housing 430 along the first direction H. One, two, three, or more third opening portions 431 may be provided. The third opening portion 431 may be provided at any position on the third housing 430. For example, the third opening portion 431 may be provided on a middle portion of the third housing 430 or provided at the outer edge of the third housing 430, or the like. Thus, when the third housing 430 is stacked on the second housing 420 along the first direction H, the third housing 430 can cover and protect the second end 422 of the second housing 420. In addition, the third opening portion 431 provided on the third housing 430 can allow the second connection portion 452 to be at least partially exposed, thereby reducing the impact of the third housing 430 on a wiring operation of the second connection portion 452, or reducing the impact of the third housing 430 on the heat dissipation of the second connection portion 452.

Optionally, the second connection portion 452 may extend into the third opening portion 431, and the second connection portion 452 at least partially extends out of the third housing 430. Alternatively, the second connection portion 452 may extend into the third opening portion 431 but does not extend out of the third housing 430. Alternatively, the second connection portion 452 does not extend into the third opening portion 431, and the second connection portion 452 is located on a side of the third housing 430 facing the second housing 420 along the first direction H.

Exemplarily, in some embodiments, seven third opening portions 431 may be provided. The seven third opening portions 431 are configured to expose the second connection portions 452 at different positions respectively, thereby improving the heat dissipation effect on the second connection portion 452.

In the power distribution apparatus 400 provided in the embodiments of this application, the second housing 420 is configured to dispose the electric component 440 and the electrical connector 450, and the first housing 410 and the third housing 430 are configured to protect the second housing 420 in the first direction H respectively, providing covering protection for the electric component 440 and the electrical connector 450, thereby improving the protection effect on the electric component 440 and the electrical connector 450, and further improving the reliability of the power distribution apparatus 400. In addition, the first connection portion 451 of the electrical connector 450 is at least partially exposed at the first opening portion 411 of the first housing 410 to achieve an electrical connection, and the second connection portion 452 is at least partially exposed at the third opening portion 431 of the third housing 430 to achieve heat dissipation, thereby meeting the electrical connection needs and heat dissipation needs of the power distribution apparatus 400, and further improving the reliability of the power distribution apparatus 400.

Referring to FIG. 4, FIG. 5, and FIG. 8, in some embodiments, a protection member 412 is disposed on the first housing 410. The protection member 412 covers the first opening portion 411, and the protection member 412 is configured to be able to open the first opening portion 411.

The protection member 412 may refer to an insulating structure with better insulation performance. Optionally, the protection member 412 may be a protection cover, a protection plate, a protection net, or other structures that can form covering protection for the first opening portion 411. Exemplarily, in some embodiments, the protection member 412 may be a protection cover structure. The protection cover is configured to cover the first opening to achieve enhanced protection for the first connection portion 451 exposed at the first opening portion 411.

It should be understood that when one or more first opening portions 411 are provided, one protection member 412 may be provided, and one protection member 412 is configured to cover and protect one or more first opening portions 411 at the same time; or when a plurality of first opening portions 411 are provided, the number of the protection members 412 may be consistent with the number of the first opening portions 411, and one protection member 412 is disposed at each first opening portion 411 for covering and protection.

The protection member 412 may be connected to the first housing 410 through various detachable connection methods such as hinging, snap-fit connection, and plug-in connection. Thus, when the first connection portion 451 exposed at the first opening portion 411 needs to be operated, the first opening portion 411 can be opened by rotating or removing the protection member 412, thereby reducing the impact of the protection member 412 on the operation of the first connection portion 451. Exemplarily, in some embodiments, the protection member 412 can adopt a protection cover. The protection cover is located inside the first opening portion 411 and hinged to an inner peripheral wall surface of the first opening portion 411. Thus, the protection cover can cover the first opening portion 411 to cover and protect the first connection portion 451 exposed at the first opening portion 411. In addition, the protection cover can be rotated to open the first opening portion 411, so that the first connection portion 451 is exposed.

With such arrangement, the protection member 412 is configured to cover and protect the first opening portion 411, thereby improving the protection performance for the first connection 451. In addition, the protection member 412 can also open the first opening portion 411, thereby reducing the impact on the connection operation of the first connection portion 451.

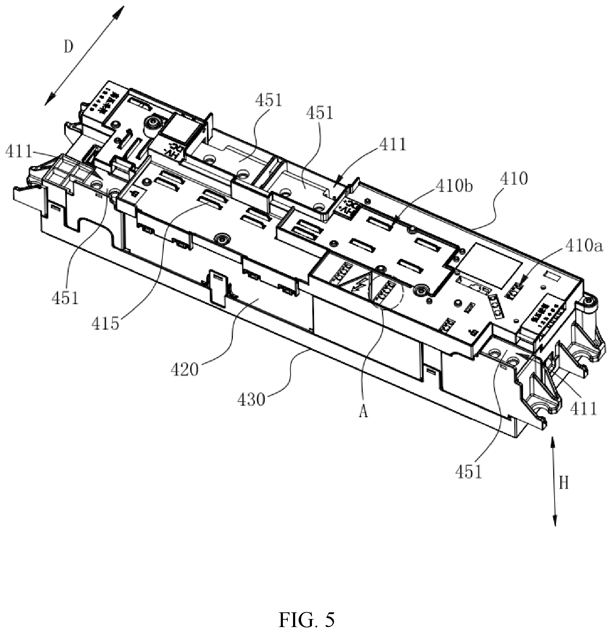

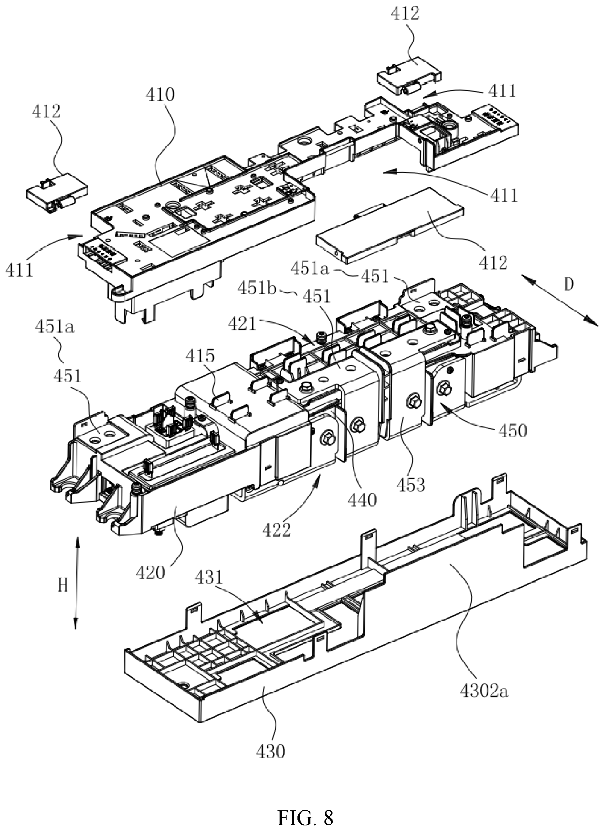

Referring to FIG. 5 and FIG. 8, in some embodiments, the first connection portion 451 includes a first connection end 451a and a second connection end 451b. The first connection end 451a is configured to be connected to the battery cell assembly 110. The second connection end 451b is configured to be connected to the electric apparatus or the charging apparatus.

The first connection end 451a and the second connection end 451b refer to different connection end portions of the first connection portion 451. It should be understood that the electrical connector 450 is configured to be electrically connected to the electric component 440. Therefore, the first connection end 451a and the second connection end 451b may be respectively connected to two portions of the electrical connector 450 located at two opposite ends of the electric component 440. Thus, when the first connection end 451a is configured to be connected to the battery cell assembly 110, and the second connection end 451b is configured to be connected to the electric apparatus or the charging apparatus, the electric component 440 may be connected in series between the battery cell assembly 110 and the electric apparatus or the charging apparatus, thereby achieving the charging and discharging control.

In some embodiments, two first connection ends 451a are provided, and the two first connection ends 451a are respectively configured to be electrically connected to the positive electrode and the negative electrode of the battery cell assembly 110. In addition, the two first connection ends 451a may be arranged at any position on the first end 421. Exemplarily, the two first connection ends 451a may be respectively arranged at two opposite ends of the first end 421 perpendicular to the first direction H.

In some embodiments, two second connection ends 451b may be provided, and the two first connection ends 451a are respectively configured to be electrically connected to a positive electrode and a negative electrode of the electric apparatus, or respectively configured to be electrically connected to a positive electrode and a negative electrode of the charging apparatus. Thus, the power distribution apparatus 400 can achieve charging and discharging control of the battery cell assembly 110. In addition, the two second connection ends 451b may be arranged at any position on the first end 421. Exemplarily, the two second connection ends 451b may be arranged close to each other, and the two second connection ends 451b may both be exposed at the same first opening portion 411, facilitating the wiring operation.

With such arrangement, the first connection end 451a is configured to be connected to the battery cell assembly 110, and the second connection end 451b is configured to be connected to the electric apparatus or the charging apparatus, thereby achieving charging and discharging management of the battery cell assembly 110 by the power distribution apparatus 400.

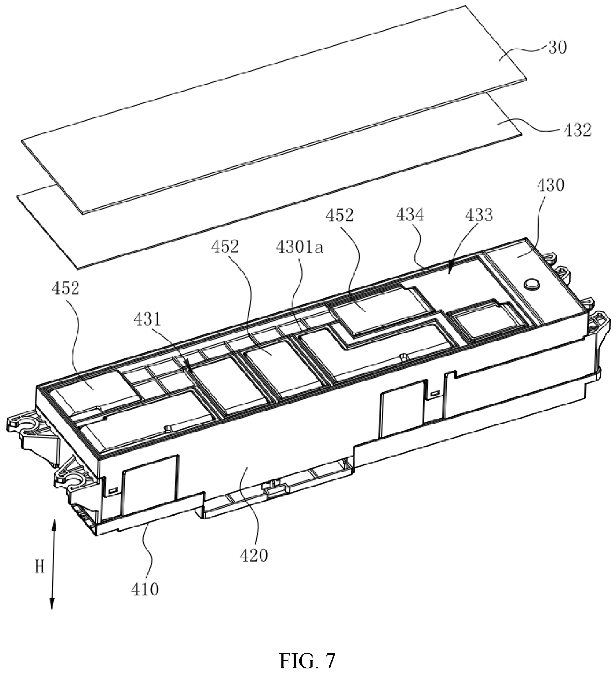

Referring to FIG. 7 to FIG. 9, in some embodiments, the power distribution apparatus 400 further includes a heat conduction member 432. In the first direction H, the heat conduction member 432 is disposed on a side of the third housing 430 facing away from the second housing 420. A portion of the second connection portion 452 exposed at the third opening portion 431 is in contact with the heat conduction member 432.

It can be understood that the heat conduction member 432 refers to a structural member with good thermal conductivity, and the heat conduction member 432 has a function of transferring heat of the second connection portion 452. Exemplarily, the heat conduction member 432 may be a heat conduction plate, a heat conduction block, a heat conduction sheet, or the like. The material of the heat conduction member 432 may be resin, rubber, silicone, or the like.

The heat conduction member 432 is disposed on the side of the third housing 430 facing away from the second housing 420. Optionally, the heat conduction member 432 may be assembled on the third housing 430 through manners such as adhesion, fastener connection, snap-fit connection, and plug-in connection. Through a manner of assembling the heat conduction member 432 on the side of the third housing 430 facing away from the second housing 420, the heat conduction member 432 can abut against and be in contact with the second connection portion 452 exposed at the third opening portion 431. Thus, heat can be conducted from the second connection portion 452 to the heat conduction member 432 to achieve the purpose of improving heat dissipation efficiency.

With such arrangement, the heat conduction member 432 is in contact with the second connection portion 452 exposed at the third opening portion 431, and the heat conduction member 432 is configured to improve the heat dissipation efficiency of the second connection portion 452, thereby reducing the temperature rise inside the power distribution apparatus 400.

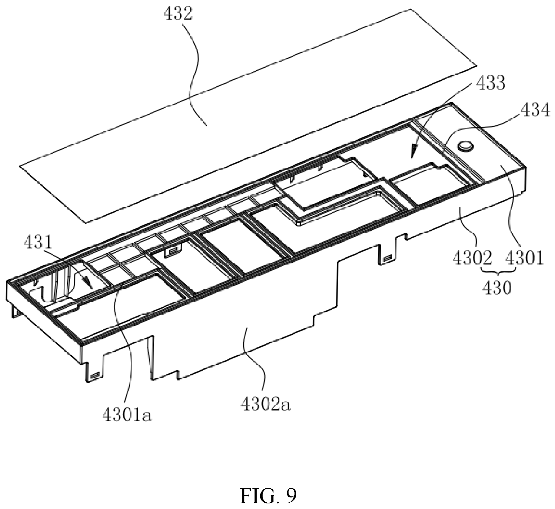

Referring to FIG. 7 and FIG. 9, in some embodiments, a mounting groove 433 is provided on a side surface of the third housing 430 facing away from the second housing 420. The heat conduction member 432 is accommodated in the mounting groove 433. The third opening portion 431 is provided on an inner bottom wall of the mounting groove 433.

The mounting groove 433 refers to an accommodating structure formed by recessing inward the side surface of the third housing 430 facing away from the second housing 420. The mounting groove 433 is configured for accommodating the heat conduction member 432. Optionally, the mounting groove 433 may be but is not limited to grooves of various shapes, such as circular grooves, polygonal grooves such as rectangular grooves, and special-shaped grooves. One mounting groove 433 may be provided. All the third opening portions 431 are provided on the inner bottom wall of the mounting groove 433. Alternatively, two or more mounting grooves 433 may be provided. The inner bottom wall of each mounting groove 433 is provided with at least one third opening portion 431.

When the heat conduction member 432 is accommodated in the mounting groove 433, the heat conduction member 432 may be fixed through manner such as gluing, or the heat conduction member 432 may be fixed through manners such as snap-fit connection and plug-in connection. Optionally, the heat conduction member 432 may be completely accommodated in the mounting groove 433, that is, an outer surface of the heat conduction member 432 does not exceed an opening range of the mounting groove 433. Alternatively, the outer surface of the heat conduction member 432 is flush with the opening of the mounting groove 433, that is, the outer surface of the heat conduction member 432 is flush with the side surface of the third housing 430 facing away from the second housing 420. Alternatively, a part of the heat conduction member 432 may be accommodated in the mounting groove 433, and another part of the heat conduction member 432 extends out of the mounting groove 433.

With such arrangement, the heat conduction member 432 is accommodated in the mounting groove 433, so that a dimension by which the heat conduction member 432 protrudes from an outer surface of the third housing 430 is reduced, thereby reducing the overall size of the power distribution apparatus 400, and reducing the impact on the energy density of the battery apparatus 100 when the power distribution apparatus 400 is applied to the battery apparatus 100.

In some embodiments, a sealing member 434, such as a sealing strip, a sealing ring, and other sealing structures, may further be provided in the mounting groove 433. The sealing member 434 is disposed between the heat conduction member 432 and the inner bottom wall of the mounting groove 433 and encloses a portion where the third opening portion 431 is provided, thereby effectively improving the sealing protection effect on the third opening portion 431 and reducing the probability of water mist or particles entering the third housing 430 from the third opening portion 431.

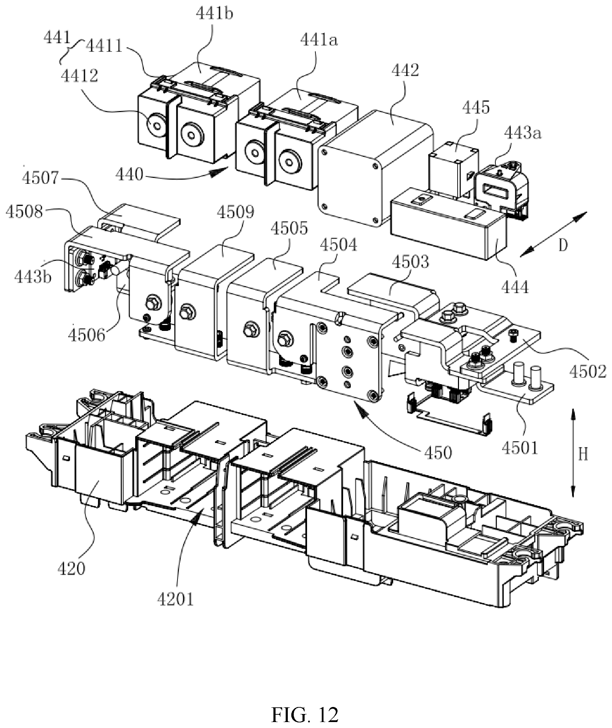

Referring to FIG. 8 and FIG. 12, in some embodiments, the electric component 440 includes a main relay 441. The main relay 441 includes a relay body 4411 and a high-voltage contact 4412. The relay body 4411 is disposed on the second housing 420. The high-voltage contact 4412 is disposed along a second direction D and faces the exterior of the second housing 420. The second direction D is perpendicular to the first direction H. The electrical connector 450 further includes a third connection portion 453. In the second direction D, the third connection portion 453 is located on a side of the second housing 420 close to the high-voltage contact 4412 and connected to the high-voltage contact 4412.

The main relay 441 may refer to an electric component that turns on or off a circuit according to changes in an input quantity (for example, physical quantities such as voltage, current, temperature, speed, or time). The main relay 441 includes a relay body 4411 and a high-voltage contact 4412. The relay body 4411 includes components such as a housing, an electromagnet, and a coil. When the input quantity input to the coil reaches a specified value, the electromagnet moves under a magnetic force of the coil, and the movement of the electromagnet drives the high-voltage contact 4412 to move, thereby changing an on/off state of a controlled circuit. In some embodiments, the main relay 441 can control the on/off state of the circuit between the battery cell assembly 110 and the electric apparatus or the charging apparatus, thereby controlling the charging and discharging of the battery cell assembly 110. Optionally, one or more main relays 441 may be provided.

The relay body 4411 is disposed on the second housing 420. Optionally, mounting structures such as accommodating grooves and mounting holes may be provided on the second housing 420 to accommodate the relay body 4411. The relay body 4411 may be fixedly assembled on the second housing 420 through locking via fasteners. The high-voltage contact 4412 is disposed along the second direction D and faces the exterior of the second housing 420. Thus, the third connection portion 453 of the electrical connector 450 is disposed on the side of the second housing 420 close to the high-voltage contact 4412 and connected to the high-voltage contact 4412 to achieve an electrical connection to the main relay 441.

The above second direction D refers to a direction perpendicular to the first direction H, and the second direction D may be but is not limited to the length direction, width direction, height direction, and the like of the second housing 420. Exemplarily, in some embodiments, the first direction H of the second housing 420 may be the height direction of the second housing 420. Correspondingly, the second direction D of the second housing 420 may be the width direction of the second housing 420.

The third connection portion 453 refers to one part of the electrical connector 450, and the third connection portion 453 may be but is not limited to conductive structures such as conductive bars and conductive sheets. Two or more third connection portions 453 may be provided. A plurality of third connection portions 453 are configured to be electrically connected to two wiring terminals of the high-voltage contact 4412 respectively and electrically connect to other electric components 440, and the like. In some embodiments, the third connection portion 453 may be connected to the high-voltage contact 4412 through locking via fasteners.

With such arrangement, the high-voltage contact 4412 of the main relay 441 is disposed along the second direction D and faces the exterior of the second housing 420. The third connection portion 453 is configured to be connected to the high-voltage contact 4412 on a side of the second housing 420 along the second direction D, thereby achieving the connection between the electrical connector 450 and the main relay 441.

Exemplarily, referring to FIG. 12, in some embodiments, the electric component 440 includes a main relay 441, a fuse 442, and a current sensor 443. Two main relays 441 are provided, which are respectively a first main relay 441a and a second main relay 441b. Two current sensors 443 are also provided, which are respectively a first current sensor 443a and a second current sensor 443b. The electrical connector 450 includes a first conductive sheet 4501, a second conductive sheet 4502, a third conductive sheet 4503, a fourth conductive sheet 4504, and a fifth conductive sheet 4505 which are connected to the first main relay 441a, the first current sensor 443a, and the fuse 442 respectively. The electrical connector 450 further includes a sixth conductive sheet 4506, a seventh conductive sheet 4507, an eighth conductive sheet 4508, and a ninth conductive sheet 4509 which are connected to the second main relay 441b and the second current sensor 443b respectively.

One end of the first conductive sheet 4501 is connected to the first end 421 of the second housing 420. The first conductive sheet 4501 is configured to be electrically connected to the positive electrode of the battery cell assembly 110. The first current sensor 443a is disposed on the second conductive sheet 4502. One end of the second conductive sheet 4502 is connected to the first conductive sheet 4501, and another end of the second conductive sheet 4502 is connected to the third conductive sheet 4503. One end of the fuse 442 is electrically connected to the third conductive sheet 4503, and another end of the fuse 442 is electrically connected to the fourth conductive sheet 4504. One wiring terminal of the high-voltage contact of the first main relay 441a is connected to the fourth conductive sheet 4504, and another wiring terminal of the high-voltage contact of the first main relay 441a is connected to the fifth conductive sheet 4505.

One end of the sixth conductive sheet 4506 is connected to the first end 421 of the second housing 420. The sixth conductive sheet 4506 is configured to be electrically connected to the negative electrode of the battery cell assembly 110. Two opposite ends of the second current sensor 443b are respectively connected to the seventh conductive sheet 4507 and the eighth conductive sheet 4508. The seventh conductive sheet 4507 is also connected to the sixth conductive sheet 4506. The eighth conductive sheet 4508 is also electrically connected to one wiring terminal of the high-voltage contact of the second main relay 441b, and another wiring terminal of the high-voltage contact of the second main relay 441b is electrically connected to the ninth conductive sheet 4509.

The third conductive sheet 4503, the fourth conductive sheet 4504, the fifth conductive sheet 4505, the eighth conductive sheet 4508, and the ninth conductive sheet 4509 can all be bent toward the second end 422 of the second housing 420 and connected to the second end 422, thereby achieving the purpose of heat dissipation at the second end 422. That is, portions of the third conductive sheet 4503, the fourth conductive sheet 4504, the fifth conductive sheet 4505, the eighth conductive sheet 4508, and the ninth conductive sheet 4509 that are bent toward the second end 422 of the second housing 420 and connected to the second end 422 are the second connection portion 452.

The first conductive sheet 4501, the fifth conductive sheet 4505, the sixth conductive sheet 4506, and the ninth conductive sheet 4509 can all be bent toward the first end 421 of the second housing 420 and connected to the first end 421, thereby achieving the purpose of electrical connection to an external structure. That is, portions of the first conductive sheet 4501, the fifth conductive sheet 4505, the sixth conductive sheet 4506, and the ninth conductive sheet 4509 that are bent toward the first end 421 of the second housing 420 and connected to the first end 421 are the first connection portion 451. The first connection portion 451 formed by the first conductive sheet 4501 and the sixth conductive sheet 4506 is the first connection end 451a. The first conductive sheet 4501 is configured to be electrically connected to the positive electrode of the battery cell assembly 110. The sixth conductive sheet 4506 is configured to be electrically connected to the negative electrode of the battery cell assembly 110. The second connection portion 452 formed by the fifth conductive sheet 4505 and the ninth conductive sheet 4509 is the second connection end 451b. The fifth conductive sheet 4505 is configured to be electrically connected to the positive electrode of the electric apparatus or the charging apparatus. The ninth conductive sheet 4509 is configured to be electrically connected to the negative electrode of the electric apparatus or the charging apparatus.

It should be understood that the above electric component 440 may also include a pre-charge resistor 444, a pre-charge relay 445, and the like. After the pre-charge resistor 444 and the pre-charge relay 445 are connected in series through a conductor, one end is electrically connected to the fourth conductive sheet 4504, and another end is electrically connected to the fifth conductive sheet 4505, thereby achieving the protection effect against transient impact.

Referring to FIG. 8 and FIG. 9, in some embodiments, a covering portion 4302a is provided on the third housing 430. In the second direction D, the covering portion 4302a is located on a side of the second housing 420 close to the third connection portion 453, and the covering portion 4302a covers the third connection portion 453.

The covering portion 4302a refers to a protection portion formed on the third housing 430 by extending along the first direction H. It should be understood that when the third housing 430 is stacked on the second housing 420 along the first direction H, the covering portion 4302a can be located on the side of the second housing 420 along the second direction D and cover the third connection portion 453.

Optionally, the covering portion 4302a can be integrally formed on the second housing 420, or the covering portion 4302a can be fixedly disposed on the second housing 420 through manners such as fastener connection, adhesion, snap-fit connection, and hot melting connection.

With such arrangement, the covering portion 4302a is configured to cover and protect the third connection portion 453 in the second direction D, improving the protection effect on the third connection portion 453, thereby further improving the reliability of the power distribution apparatus 400.

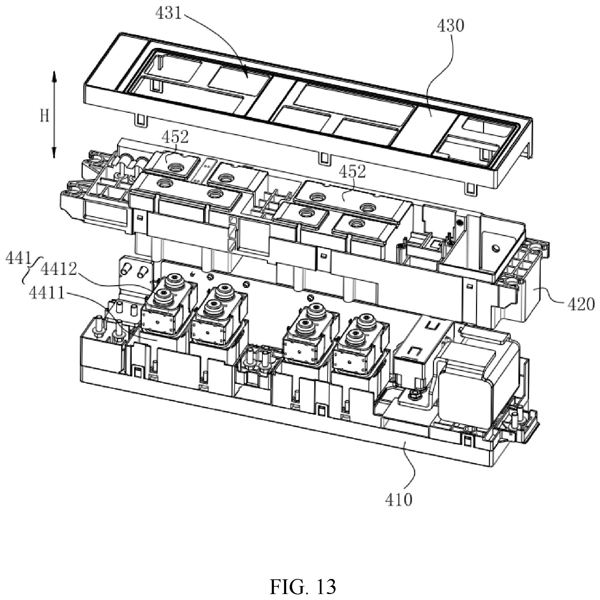

Referring to FIG. 13, in some embodiments, the electric component 440 includes a main relay 441. The main relay 441 includes a relay body 4411 and a high-voltage contact 4412. The relay body 4411 is disposed on the second housing 420. The high-voltage contact 4412 is disposed along the first direction H and faces the third housing 430. The high-voltage contact is connected to the second connection portion 452.

In these embodiments, the high-voltage contact 4412 of the main relay 441 is disposed along the first direction H and faces the third housing 430. The high-voltage contact 4412 and the second connection portion 452 are located on a same side of the second housing 420. Thus, the second connection portion 452 is configured to be electrically connected to the high-voltage contact 4412.

With such arrangement, the high-voltage contact 4412 of the main relay 441 is disposed along the first direction H and faces the third housing 430, so that the second connection portion 452 is configured to form a connection with the high-voltage contact 4412, thereby achieving the connection between the electrical connector 450 and the main relay 441.

Referring to FIG. 8 and FIG. 9, in some embodiments, the third housing 430 includes a bottom housing portion 4301 and a first flange portion 4302 disposed at an outer edge of the bottom housing portion 4301. The bottom housing portion 4301 and the first flange portion 4302 jointly cover the second end 422 along the first direction H. The bottom housing portion 4301 is connected to the second housing 420, and/or the first flange portion 4302 is connected to the second housing 420. The bottom housing portion 4301 is provided with the third opening portion 431.

The bottom housing portion 4301 serves as a body portion of the third housing 430. When the third housing 430 is stacked on the second housing 420, the bottom housing portion 4301 can cover the second end 422 of the second housing 420 to form protection. Optionally, the bottom housing portion 4301 may be a plate structure, such as a rectangular plate, a circular plate, and plates of other shapes.

The outer edge of the bottom housing portion 4301 is folded toward the first direction H to form the first flange portion 4302. Optionally, the entire outer edge of the bottom housing portion 4301 is provided with the first flange portion 4302, or part of the outer edge of the bottom housing portion 4301 is provided with the first flange portion 4302.

In the first direction H, the bottom housing portion 4301 and the first flange portion 4302 jointly cover the second end 422. Optionally, in some embodiments, the first flange portion 4302 abuts against a surface of the second end 422, so that a certain gap is formed between the bottom housing portion 4301 and the second end 422. The gap between the bottom housing portion 4301 and the second end 422 may be configured for accommodating the assembly of the electric component 440 or the electrical connector 450. Alternatively, in some other embodiments, the first flange portion 4302 can cover part of the outer peripheral wall surface of the second housing 420 around the first direction H. Thus, the bottom housing portion 4301 and the first flange portion 4302 cover and protect the second end 422 more fully.

The bottom housing portion 4301 is connected to the second housing 420. Optionally, the bottom housing portion 4301 may be fixedly connected to the second housing 420 through locking via fasteners. Exemplarily, in some embodiments, a connection portion for locking fasteners such as bolts or screws may be provided on the bottom housing portion 4301, where the connection portion is disposed facing the second end 422. Thus, the connection portion and the second end 422 can be locked and fixed using fasteners; or the bottom housing portion 4301 can also be fixedly connected to the second housing 420 through manners such as snap-fit connection and plug-in connection.

Alternatively, the first flange portion 4302 is connected to the second housing 420. Optionally, the first flange portion 4302 can be fixedly connected to the second housing 420 through a snap-fit connection manner. Exemplarily, in some embodiments, a snap-fit protrusion may be provided on the outer peripheral wall surface of the second housing 420 around the first direction H, and a snap-fit groove is provided on the first flange portion 4302. Thus, the first flange portion 4302 can be connected to the second housing 420 by inserting the snap-fit protrusion into the snap-fit groove; or the first flange portion 4302 can also be fixed to the second housing 420 through locking via fasteners.

With such arrangement, when the third housing 430 is stacked on the second end 422 of the second housing 420 along the first direction H, the bottom housing portion 4301 and the first flange portion 4302 can jointly cover the second end 422 and are connected to the second housing 420, thereby effectively improving the covering and protection effect on the second end 422 of the second housing 420.

Referring to FIG. 7 to FIG. 9, in some embodiments, a plurality of third opening portions 431 are provided. In the first direction H, a separation portion 4301a is disposed on a side wall surface of the third housing 430 facing away from the second housing 420. The separation portion 4301a is disposed between two adjacent third opening portions 431 and configured to separate the two adjacent third opening portions 431.

The separation portion 4301a refers to a protrusion structure protruding from the side wall surface of the third housing 430 facing away from the second housing 420 along the first direction H. The separation portion 4301a may be fixed to the third housing 430 through manners such as locking via fasteners, snap-fit connection, and hot melting connection; or the separation portion 4301a may also be formed on the third housing 430 through an integral injection molding manner.

Optionally, one, two, or more separation portions 4301a may be provided. One or more separation portions 4301a may be provided between two adjacent third opening portions 431.

It should be understood that when the mounting groove 433 is provided on the side surface of the third housing 430 facing away from the second housing 420, the separation portion 4301a is provided on the inner bottom wall of the mounting groove 433. Optionally, the separation portion 4301a may be located inside the mounting groove 433. In the first direction H, the separation portion 4301a does not extend out of the range of the mounting groove 433; or the separation portion 4301a can extend out of the mounting groove 433 along the first direction H.

With such arrangement, when the second connection portion 452 is exposed at the third opening portion 431, the separation portion 4301a can increase electrical clearance and creepage distance between adjacent second connection portions 452, thereby reducing the probability of short-circuit arcing.

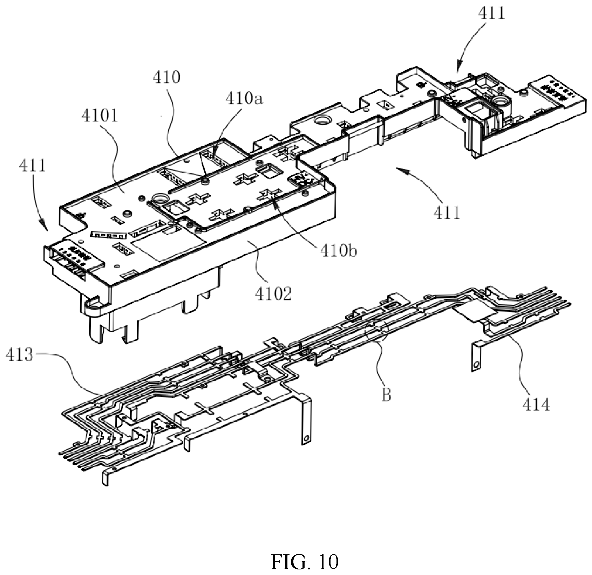

Referring to FIG. 8 and FIG. 10, in some embodiments, the first housing 410 includes a top cover portion 4101 and a second flange portion 4102 disposed at an outer edge of the top cover portion 4101. The top cover portion 4101 and the second flange portion 4102 jointly cover the first end 421 along the first direction H. The top cover portion 4101 is connected to the second housing 420, and/or the second flange portion 4102 is connected to the second housing 420. The top cover portion 4101 is provided with the first opening portion 411.

The top cover portion 4101 serves as a body portion of the first housing 410. When the first housing 410 is stacked on the second housing 420, the top cover portion 4101 can cover the first end 421 of the second housing 420 to form protection. Optionally, the top cover portion 4101 may be a plate structure, such as a rectangular plate, a circular plate, and plates of other shapes.

The outer edge of the top cover portion 4101 is folded toward the first direction H to form the second flange portion 4102. Optionally, the entire outer edge of the top cover portion 4101 is provided with the second flange portion 4102, or part of the outer edge of the top cover portion 4101 is provided with the second flange portion 4102.

In the first direction H, the top cover portion 4101 and the second flange portion 4102 jointly cover the first end 421. Optionally, in some embodiments, the second flange portion 4102 abuts against a surface of the first end 421, so that a certain gap is formed between the top cover portion 4101 and the first end 421. The gap between the top cover portion 4101 and the first end 421 may be configured for accommodating the assembly of the electric component 440 or the electrical connector 450. Alternatively, in some other embodiments, the second flange portion 4102 can cover part of the outer peripheral wall surface of the second housing 420 around the first direction H. Thus, the top cover portion 4101 and the second flange portion 4102 cover and protect the first end 421 more fully.

Optionally, in some embodiments, the first flange portion 4302, the second flange portion 4102, and the outer peripheral wall surface of the second housing 420 around the first direction H may be flush with each other, thereby forming a relatively flat surface at the exterior of the entire power distribution apparatus 400, thereby improving the assembly convenience.

The top cover portion 4101 is connected to the second housing 420. Optionally, the top cover portion 4101 may be fixedly connected to the second housing 420 through locking via fasteners. Exemplarily, in some embodiments, a connection portion for locking fasteners such as bolts or screws can be provided on the top cover portion 4101, and the connection portion is disposed facing the first end 421. Thus, the connection portion and the first end 421 can be locked and fixed using fasteners; or the top cover portion 4101 can also be fixedly connected to the second housing 420 through manners such as snap-fit connection and plug-in connection.

Alternatively, the second flange portion 4102 is connected to the second housing 420. Optionally, the second flange portion 4102 can be fixedly connected to the second housing 420 through a snap-fit connection manner. Exemplarily, in some embodiments, a snap-fit protrusion may be provided on the outer peripheral wall surface of the second housing 420 around the first direction H, and a snap-fit groove is provided on the second flange portion 4102. Thus, the second flange portion 4102 can be connected to the second housing 420 by inserting the snap-fit protrusion into the snap-fit groove; or the second flange portion 4102 can also be fixed to the second housing 420 through locking via fasteners.

With such arrangement, when the first housing 410 is stacked on the first end 421 of the second housing 420 along the first direction H, the top cover portion 4101 and the second flange portion 4102 can jointly cover the first end 421, thereby effectively improving the covering and protection effect on the first end 421 of the second housing 420.

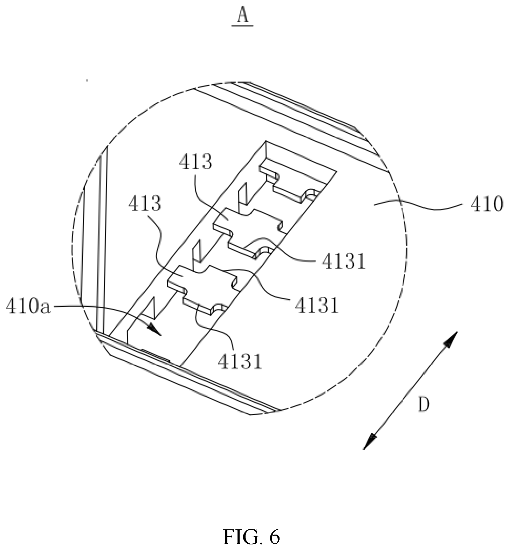

Referring to FIG. 5, FIG. 6, and FIG. 10, in some embodiments, a plurality of first conductor members 413 spaced apart are embedded inside the first housing 410. A first extension portion 4131 is formed between adjacent first conductor members 413. A first through hole 410a is further provided on the first housing 410. The first through hole 410a is located between two opposite first extension portions 4131 of two adjacent first conductor members 413.

The first conductor member 413 refers to a conductive structure with higher conductivity. Optionally, the first conductor member 413 may be a conductive sheet, a conductive wire, or other conductive structures. A plurality of first conductor members 413 are provided. For example, two, three, four, or more first conductor members 413 may be provided. The plurality of first conductor members 413 are spaced apart. It should be understood that the first conductor member 413 may be configured to be electrically connected to the electric component 440, thereby achieving the purpose of low-voltage sampling detection.

The distribution direction of the above first conductor members 413 refers to a direction parallel to any plane perpendicular to the first direction H. Exemplarily, the distribution direction may be, but is not limited to being, parallel to the second direction D. Thus, the plurality of first conductor members 413 may be sequentially spaced apart inside the first housing 410.

The first conductor members 413 are embedded inside the first housing 410. Specifically, after the plurality of first conductor members 413 are spaced apart, the first housing 410 is formed by injection molding outside the first conductor members 413. Thus, the first conductor members 413 are embedded inside. In some embodiments, to position and embed the plurality of first conductor members 413 spaced apart, a first connecting rib may be provided between adjacent first conductor members 413 to form the plurality of first conductor members 413 into an entirety. After injection molding of the first housing 410, the first connecting rib is cut off at the first through hole 410a to disconnect adjacent first conductor members 413. Thus, the disconnected first connecting rib forms the first extension portion 4131 on the first conductor member 413. It should be understood that according to the cutting method of the above first connecting rib, the first connecting rib formed between the plurality of first conductor members 413 can be exposed at the first through hole 410a, facilitate the cutting of the first connecting rib at the first through hole 410a.

Optionally, the above first through hole 410a may be a circular hole, a waist-shaped hole, a rectangular hole, or a hole of another shape. The number of the first through holes 410a may be consistent with the number of the first connecting ribs, so that all the first connecting ribs can be cut through the first through holes 410a.

With such arrangement, the first through hole 410a is provided on the first housing. The plurality of first conductor members 413 can all be exposed at the first through hole 410a, facilitating the processing of the first conductor members 413.

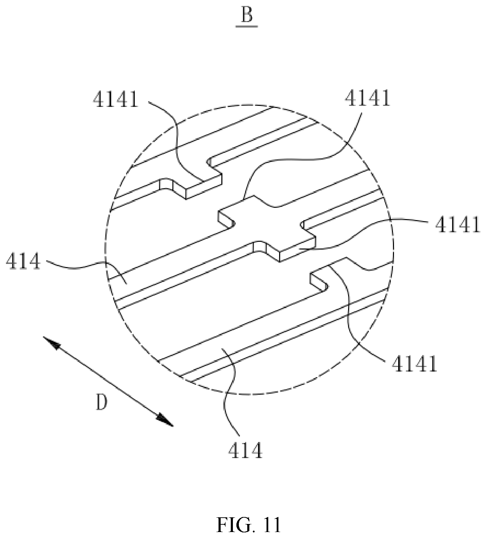

Referring to FIG. 5, FIG. 10, and FIG. 11, in some embodiments, a plurality of second conductor members 414 spaced apart are embedded inside the first housing 410. A second extension portion 4141 is formed between adjacent second conductor members 414. A second through hole 410b is further provided on the first housing 410. The second through hole 410b is located between two opposite second extension portions 4141 of two adjacent second conductor members 414. The power distribution apparatus 400 further includes a partition portion 415. The partition portion 415 is inserted into the first through hole 410a and configured to separate the two second extension portions 4141.

The second conductor member 414 refers to a conductive structure with higher conductivity. Optionally, the second conductor member 414 may be a conductive sheet, a conductive wire, or other conductive structures. A plurality of second conductor members 414 are provided. For example, two, three, four, or more second conductor members 414 may be provided. The plurality of second conductor members 414 are spaced apart. It should be understood that the second conductor member 414 may be configured to be electrically connected to the electrical connector 450, thereby achieving the purpose of high-voltage sampling detection.

The distribution direction of the above second conductor members 414 refers to a direction parallel to any plane perpendicular to the first direction H. Exemplarily, the distribution direction may be, but is not limited to being, parallel to the second direction D. Thus, the plurality of second conductor members 414 may be sequentially spaced apart inside the first housing 410.

The second conductor member 414 is embedded inside the first housing 410. Specifically, after the plurality of second conductor members 414 are spaced apart, the first housing 410 is formed by injection molding outside the second conductor members 414. Thus, the second conductor members 414 are embedded inside. In some embodiments, to position and embed the plurality of second conductor members 414 spaced apart, a second connecting rib may be provided between adjacent second conductor members 414 to form the plurality second conductor members 414 into an entirety. After injection molding of the second housing 420, the second connecting rib is cut off at the second through hole 410b to disconnect adjacent second conductor members 414. Thus, the disconnected second connecting rib forms the second extension portion 4141 on the second conductor member 414. It should be understood that according to the cutting method of the above second connecting rib, the second extension portion 4141 can be exposed at the corresponding second through hole 410b, or the second extension portion 4141 may be flush with an inner wall surface of the second through hole 410b.

Optionally, the above second through hole 410b may be a circular hole, a waist-shaped hole, a rectangular hole, or a hole of another shape. The number of the second through holes 410b may be consistent with the number of the second connecting ribs, so that all the second connecting ribs can be cut through the second through hole 410b.

A size N of the second through hole 410b refers to an aperture size of the second through hole 410b along the distribution direction of the second conductor members 414. Exemplarily, when the second through hole 410b is a rectangular hole, the size N of the second through hole 410b is the aperture size of the second through hole 410b along the distribution direction of the second conductor members 414. When the second through hole 410b is a circular hole, the size N of the second through hole 410b is a diameter of the second through hole 410b.

The partition portion 415 refers to a structure with better insulation performance such as an insulating protrusion or an insulating sheet. One, two, or more partition portions 415 may be provided. Optionally, the partition portion 415 may be disposed on the second end 422 of the second housing 420. When the first housing 410 is stacked on the second housing 420, the partition portion 415 is correspondingly inserted into the second through hole 410b and separate the two second extension portions 4141 at the second through hole 410b. Alternatively, an insertion plate may further be provided on an outer wall surface of the first housing 410 facing away from the second housing 420. The partition portion 415 is disposed on the insertion plate. When the insertion plate is assembled on the first housing 410, the partition portion 415 can be inserted into the corresponding second through hole 410b.

With such arrangement, the second through hole 410b is formed on the second housing 420, and the partition portion 415 is inserted into the first through hole 410a and configured to separate the two opposite second extension portions 4141 of the two adjacent second conductor members 414, so that electrical clearance and creepage distance between the two second extension portions 4141 of the two adjacent second conductor members 414 can be effectively ensured, thereby reducing the probability of short circuit between the two second extension portions 4141.

Referring to FIG. 8 and FIG. 12, in some embodiments, at least one accommodating cavity 4201 is formed on the second housing 420, and the electric component 440 is accommodated in the accommodating cavity 4201.

One, two, or more accommodating cavities 4201 may be provided on the second housing 420. The one or more accommodating cavities 4201 are configured to accommodate the electric component 440 respectively to achieve assembly connection of the electric component 440. One electric component 440 can be accommodated in one accommodating cavity 4201; or two or more electric components 440 can be accommodated in one accommodating cavity 4201.

Optionally, the accommodating cavity 4201 may be provided on the first end 421. The first end 421 is recessed inward to form one or more accommodating cavities 4201. Alternatively, the accommodating cavity 4201 may be provided on the second end 422. The second end 422 is recessed inward to form one or more accommodating cavities 4201. Alternatively, a plurality of accommodating cavities 4201 are alternately provided on the first end 421 and the second end 422 as well as on the second housing 420 in the second direction D.

Exemplarily, in some embodiments, the electric component 440 includes a first current sensor 443a, a second current sensor 443b, a first main relay 441a, a second main relay 441b, a fuse 442, a pre-charge relay 445, and a pre-charge resistor 444. A first accommodating cavity and a second accommodating cavity are provided on the first end 421 of the second housing 420. The first accommodating cavity and the second accommodating cavity are configured to accommodate the pre-charge relay 445 and the pre-charge resistor 444 respectively. A third accommodating cavity, a fourth accommodating cavity, and a fifth accommodating cavity are provided on the second end 422 of the second housing 420 to accommodate the first current sensor 443a, the fuse 442, and the second current sensor 443b respectively. In addition, in the second direction D, a sixth accommodating cavity and a seventh accommodating cavity are further provided on the second housing 420 to accommodate the first main relay 441a and the second main relay 441b respectively. Thus, compact assembly of the electric component 440 can be achieved.

The power distribution apparatus 400 provided by this application will be described in detail according to specific embodiments.

Referring to FIG. 4 to FIG. 12, in these embodiments, the power distribution apparatus 400 includes an electric component 440, an electrical connector 450, and a first housing 410, a second housing 420, and a third housing 430 sequentially stacked along a first direction H. The first direction H may refer to a height direction of the second housing 420. The electric component 440 includes a first current sensor 443a, a second current sensor 443b, a pre-charge relay 445, a pre-charge resistor 444, a first main relay 441a, a second main relay 441b, and a fuse 442. A plurality of accommodating cavities 4201 are provided on the second housing 420 for accommodating the above electric components 440 respectively. In these embodiments, the first main relay 441a and the second main relay 441b are both inserted into the second housing 420 along a second direction D. High-voltage contacts 4412 of the first main relay 441a and the second main relay 441b are both exposed toward the second direction D. The second direction D may refer to a width direction of the second housing 420.

The second housing 420 further includes a first end 421 disposed along the first direction H and facing the first housing 410, and a second end 422 disposed along the first direction H and facing the third housing 430. The electrical connector 450 includes a first connection portion 451, a second connection portion 452, and a third connection portion 453. The first connection portion 451 can be locked to the first end 421 through fasteners. The second connection portion 452 can be locked to the second end 422 through fasteners. The third connection portion 453 may be provided on a side of the second housing 420 in the second direction D and connected to the first main relay 441a and the second main relay 441b.

A first opening portion 411 is provided on the first housing 410. The first housing 410 can cover the first end 421 through snap-fit connection or locking connection via fasteners. The first connection portion 451 can be exposed at the first opening portion 411 to achieve an electrical connection between the first connection portion 451 and an external structure. In addition, a protection member 412, such as a protection cover, may be provided on the first opening portion 411. The protection cover can be hinged at a port of the first opening portion 411 to cover and protect the first connection member.

A third opening portion 431 is provided on the third housing 430. The third housing 430 can cover the second end 422 through snap-fit connection or locking connection via fasteners. The second connection portion 452 can be exposed at the third opening portion 431. In addition, a mounting groove 433 may be provided on a side of the third housing 430 facing away from the second housing 420. A heat conduction member 432 is accommodated in the mounting groove 433. The heat conduction member 432 is configured to be in contact with the exposed third connection portion 453, thereby achieving the purpose of improving the heat dissipation effect on the third connection portion 453.

Referring to FIG. 2, an embodiment of this application further provides a battery apparatus 100 including a box, a battery cell assembly 110, and the foregoing power distribution apparatus 400. The battery cell assembly 110 and the power distribution apparatus 400 are accommodated in the box. The power distribution apparatus 400 is electrically connected to the battery cell assembly 110.

The battery apparatus 100 provided in this embodiment of this application includes the foregoing power distribution apparatus 400. On the basis that the foregoing power distribution apparatus 400 has higher reliability, the reliability of the battery apparatus 100 is also higher.

Referring to FIG. 2, FIG. 3, and FIG. 7, in some embodiments, the battery apparatus 100 further includes a heat exchange plate 30. The heat exchange plate 30 is attached to the battery cell assembly 110. The power distribution apparatus 400 includes a heat conduction member 432. The heat conduction member 432 is attached to the heat exchange plate 30.

The heat exchange plate 30 refers to a plate structure in the battery apparatus 100 where a heat exchange flow channel is formed. A cooling medium circulates in the heat exchange flow channel to achieve heat exchange and heat dissipation with the battery cell assembly 110 in the battery apparatus 100. The heat exchange plate 30 is configured to perform heat exchange and heat dissipation on the battery cell assembly 110.

In this embodiment, the heat conduction member 432 of the power distribution apparatus 400 may be attached to the heat exchange plate 30, that is, the heat conduction member 432 shares the heat exchange plate 30 with the battery cell assembly 110. Thus, the second connection portion 452 exposed at the third opening portion 431 of the third housing 430 is in contact with the heat conduction member 432, so that the heat of the second connection portion 452 can be transferred to the heat exchange plate 30 through the heat conduction member 432, thereby achieving efficient heat dissipation of the second connection portion 452.

With such arrangement, the power distribution apparatus 400 can share the heat exchange plate 30 through the heat conduction member 432, thereby improving the heat dissipation effect on the power distribution apparatus 400.

Referring to FIG. 1 and FIG. 2, an embodiment of this application further provides an electric apparatus including the foregoing battery apparatus 100. The battery apparatus 100 is configured to supply electrical energy.

The electric apparatus provided in this embodiment of this application, for example, the foregoing vehicle 1000, includes the foregoing battery apparatus 100, so that the reliability of the electric apparatus is also higher.

The above are only preferred embodiments of this application and are not intended to limit this application. Any modifications, equivalent replacements, improvements, and the like made within the spirit and principles of this application should fall within the protection scope of this application.

## Claims

1. A power distribution apparatus, **characterized by** comprising a first housing, a second housing, a third housing, an electric component, and an electrical connector, wherein in a first direction, the first housing, the second housing, and the third housing are sequentially stacked, the electric component is disposed on the second housing, and the electrical connector is electrically connected to the electric component; and
the electrical connector comprises a first connection portion and a second connection portion, the second housing has a first end facing the first housing and a second end facing the third housing, the first connection portion is connected to the first end, and the second connection portion is connected to the second end;
wherein a first opening portion is provided on the first housing, the first housing covers the first end, the first connection portion is at least partially exposed at the first opening portion; and a third opening portion is provided on the third housing, the third housing covers the second end, and the second connection portion is at least partially exposed at the third opening portion.

2. The power distribution apparatus according to claim 1, **characterized in that** a protection member is disposed on the first housing, wherein the protection member covers the first opening portion, and the protection member is configured to be able to open the first opening portion.

3. The power distribution apparatus according to claim 1 or 2, **characterized in that** the first connection portion comprises a first connection end and a second connection end, wherein the first connection end is configured to be connected to a battery cell assembly, and the second connection end is configured to be connected to an electric apparatus or a charging apparatus.

4. The power distribution apparatus according to any one of claims 1 to 3, **characterized in that** the power distribution apparatus further comprises a heat conduction member, wherein in the first direction, the heat conduction member is disposed on a side of the third housing facing away from the second housing, and a portion of the second connection portion exposed at the third opening portion is in contact with the heat conduction member.

5. The power distribution apparatus according to claim 4, **characterized in that** a mounting groove is provided on a side surface of the third housing facing away from the second housing, wherein the heat conduction member is accommodated in the mounting groove, and the third opening portion is provided on an inner bottom wall of the mounting groove.

6. The power distribution apparatus according to any one of claims 1 to 5, **characterized in that** the electric component comprises a main relay, wherein the main relay comprises a relay body and a high-voltage contact, the relay body is disposed on the second housing, the high-voltage contact is disposed along a second direction and faces the exterior of the second housing, and the second direction is perpendicular to the first direction; and
the electrical connector further comprises a third connection portion, and in the second direction, the third connection portion is located on a side of the second housing close to the high-voltage contact and connected to the high-voltage contact.

7. The power distribution apparatus according to claim 6, **characterized in that** a covering portion is provided on the third housing, wherein in the second direction, the covering portion is located on a side of the second housing close to the third connection portion, and the covering portion covers the third connection portion.

8. The power distribution apparatus according to any one of claims 1 to 5, **characterized in that** the electric component comprises a main relay, wherein the main relay comprises a relay body and a high-voltage contact, the relay body is disposed on the second housing, the high-voltage contact is disposed along the first direction and faces the third housing, and the high-voltage contact is connected to the second connection portion.

9. The power distribution apparatus according to any one of claims 1 to 8, **characterized in that** the third housing comprises a bottom housing portion and a first flange portion disposed at an outer edge of the bottom housing portion, wherein the bottom housing portion and the first flange portion jointly cover the second end along the first direction; the bottom housing portion is connected to the second housing, and/or the first flange portion is connected to the second housing; and the bottom housing portion is provided with the third opening portion.

10. The power distribution apparatus according to any one of claims 1 to 9, **characterized in that** a plurality of third opening portions are provided, wherein in the first direction, a separation portion is disposed on a side wall surface of the third housing facing away from the second housing, and the separation portion is disposed between two adjacent third opening portions and configured to separate the two adjacent third opening portions.

11. The power distribution apparatus according to any one of claims 1 to 10, **characterized in that** the first housing comprises a top cover portion and a second flange portion disposed at an outer edge of the top cover portion, wherein the top cover portion and the second flange portion jointly cover the first end along the first direction; the top cover portion is connected to the second housing, and/or the second flange portion is connected to the second housing; and the top cover portion is provided with the first opening portion.

12. The power distribution apparatus according to claim 11, **characterized in that** a plurality of first conductor members spaced apart are embedded inside the first housing, wherein a first extension portion is formed between adjacent first conductor members; a first through hole is further provided on the first housing; and the first through hole is located between two opposite first extension portions of two adjacent first conductor members.

13. The power distribution apparatus according to claim 11 or 12, **characterized in that** a plurality of second conductor members spaced apart are embedded inside the first housing, wherein a second extension portion is formed between adjacent second conductor members; and
a second through hole is further provided on the first housing portion, and the second through hole is located between two opposite second extension portions of two adjacent second conductor members; and the power distribution apparatus further comprises a partition portion, and the partition portion is inserted into the first through hole and separates two second extension portions.

14. The power distribution apparatus according to any one of claims 1 to 13, **characterized in that** at least one accommodating cavity is formed on the second housing, and the electric component is accommodated in the accommodating cavity.

15. A battery apparatus, **characterized by** comprising a box, a battery cell assembly, and the power distribution apparatus according to any one of claims 1 to 14, wherein the battery cell assembly and the power distribution apparatus are accommodated in the box, and the power distribution apparatus is electrically connected to the battery cell assembly.

16. The battery apparatus according to claim 15, **characterized in that** the battery apparatus further comprises a heat exchange plate, wherein the heat exchange plate is attached to the battery cell assembly; and the power distribution apparatus comprises a heat conduction member, and the heat conduction member is attached to the heat exchange plate.

17. An electric apparatus, **characterized by** comprising the battery apparatus according to claim 15 or 16, wherein the battery apparatus is configured to supply electrical energy.
